(19) Europäisches Patentamt
European Patent Office
Office européen des brevets

(11) EP 2 157 142 B1

(12) EUROPEAN PATENT SPECIFICATION

(45) Date of publication and mention of the grant of the patent:
**12.10.2011 Bulletin 2011/41**

(51) Int Cl.:
***C09D 11/00*** *(2006.01)*

(21) Application number: **09168372.2**

(22) Date of filing: **21.08.2009**

# (54) Ink composition for ink-jet printing and printing method

Tintenzusammensetzung für den Tintenstrahldruck und Druckverfahren

Composition d'encre pour impression par jet d'encre et procédé d'impression

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.08.2008 JP 2008214573**

(43) Date of publication of application:
**24.02.2010 Bulletin 2010/08**

(73) Proprietor: **Seiko Epson Corporation**
**Shinjuku-ku**
**Tokyo (JP)**

(72) Inventors:
- **Sao, Akihito**
  **Nagano 392-8502 (JP)**
- **Ikeda, Yasunari**
  **Nagano 392-8502 (JP)**

(74) Representative: **HOFFMANN EITLE**
**Patent- und Rechtsanwälte**
**Arabellastraße 4**
**81925 München (DE)**

(56) References cited:
**EP-A- 1 526 162**
**WO-A-2008/019075**
**US-A- 5 830 263**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 157 142 B1

## Description

1. Technical Field

The present invention relates to an ink composition for ink-jet printing and a printing method using the ink composition.

2. Related Art

The following processes have been conventionally used to print patterns such as images and characters on pieces of fabric: screen-printing methods, roller-printing methods, rotary screen-printing methods, and transfer printing methods. The conventional methods require complicated operations for preparing traces and/or printing plates for each pattern and therefore are unsuitable for cost reduction, particularly for high-mix low-volume production. In order to solve these disadvantages, the following method has been developed and put into practical use: an ink-jet printing method in which an image sample is read with an image input device such as a scanner, processed with a computer, and then printed on a piece of fabric by an ink-jet recording process in accordance with obtained image information. The ink-jet recording process is as follows: ink droplets are ejected from an ink head toward a recording medium such as a piece of paper or fabric so as to be applied to the recording medium. The ink-jet recording process has already been widely used for printing on paper is being attempted to be used for printing on fabric.

For example, Japanese Unexamined Patent Application Publication No. 7-3666 discloses an ink-jet printing method and an ink set including a combination of dyes with perceived chromaticity indexes a and b specified in a hue range (CIE 1976 (L*a*b*) space) on a cloth.

Japanese Unexamined Patent Application Publication No. 8-302266 discloses an aqueous ink, having good lubricity and smooth writing touch, for ball-point pens. The aqueous ink contains a dye, water, and a polyoxyethylene alkyl ether having the formula $RO(CH_2CH_2O)_nH$, wherein R is an alkyl group with 16 to 18 carbon atoms and n is a number greater than or equal to 3.

Japanese Unexamined Patent Application Publication No. 8-209048 discloses an ink-jet water-dispersible ink which is fixable to plain paper and fabric and which has good color developability and fastness. The ink-jet water-dispersible ink contains water, a water-soluble organic solvent, a dispersive dye or pigment, an alkali-soluble, water-soluble polymer with a carboxylic acid number, and/or a surfactant. The surfactant is a polyoxyethylene alkyl ether or polyoxyethylene alkylphenyl ether which contains ethylene oxide units terminated with an anionic dissociable group selected from a phosphoric group and a carboxylic group and which has a hydrophile-lipophile balance (HLB) of ten or more.

WO 2008/019075 discloses a dye-based inkjet ink set comprising at least two differently coloured inks. One ink is a cyan ink comprising a cyan dye in an aqueous vehicle, wherein said cyan dye is Acid Blue 290, Acid Blue 292, Acid Blue 294, Acid Blue 341 or Acid Blue 343. The inks are provided in a vehicle which may be formed from a mixture of water and at least one water-soluble organic solvent as a co-solvent. The co-solvent may be an addition polymer of ethylene oxide or propylene oxide such as polyethylene glycol.

## SUMMARY

The inventors have found that a printed items, such as printed fabric, having good water solubility, stability, printing properties, color, sharpness, light resistance, and fastness can be prepared by an ink-jet printing method which uses an ink composition comprising a water-soluble dye with a specific anthraquinone skeleton in combination with a specific polyoxyethylene alkyl ether. The present invention is based on this finding.

An advantage of some aspects of the present invention is to provide an ink composition, having good water solubility, stability, printing properties, color, sharpness, light resistance, and fastness, for ink-jet printing.

According to the present invention, an ink composition for ink-jet printing contains a water-soluble dye having an anthraquinone skeleton whose water-solubility is 50 g/l or less at 30°C and which is selected from C.I. Acid Blue 258, 280 and 290; and at least one polyoxyethylene alkyl ether having an HLB of 11.4 to 18.8 and the following formula:

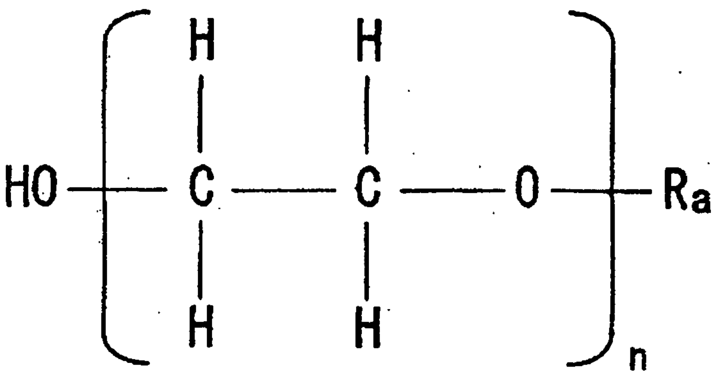 (I)

wherein n is four to 100 and Ra is a saturated alkyl group with eight to 24 carbon atoms.

An ink-jet printing method includes using the ink composition.

According to the present invention, an ink composition for ink-jet printing can be provided. The ink composition is capable of achieving good water solubility, stability, printing properties, color, sharpness, light resistance, and fastness.

DESCRIPTION OF EXEMPLARY EMBODIMENTS

According to one embodiment of the present invention, an ink composition for ink-jet printing contains a water-soluble dye which has an anthraquinone skeleton,which dye has a water solubility of 50 g/L or less at 30°C and also contains at least one polyoxyethylene alkyl ether which has an HLB of 11.4 to 18.8 and Formula (I) described above.

The term "HLB" as used herein is defined as a value determined by the following equation:

$$HLB = I / O \times 10$$

wherein I is an inorganic value and O is an organic value specified in an organic conceptual diagram.

Inorganic and organic values are specified in Koda, Y, Yuki Gainenzu - Kiso to Oyo and Fujita, A et al., Keitoteki Yuki Teisei Bunseki (Kongobutuh*en).*

The water-soluble dye has the anthraquinone skeleton and a water solubility of 50 g/L or less at 30°C as described above. The water-soluble dye is C. I. Acid Blue 258, 280 or 290. The water-soluble dye is preferably C. I. Acid Blue 290.

The content of the water-soluble dye in the ink composition may be determined such that good water solubility, stability, printing properties, color, sharpness, light resistance, and fastness can be achieved. The content of the water-soluble dye therein is preferably, for example, 10% by weight or less.

The polyoxyethylene alkyl ether has an HLB of 11.4 to 18.8 and Formula (I) as described above. The polyoxyethylene alkyl ether contains a saturated alkyl group represented by Ra in Formula (I). The saturated alkyl group may be linear or branched and is preferably linear.

It is preferred that the polyoxyethylene alkyl ether has an HLB of 12.1 to 17.9, the saturated alkyl group Ra has eight to 24 carbon atoms, and n in Formula (I) is four to 100. It is more preferred that the polyoxyethylene alkyl ether has an HLB of 12.1 to 16.4, the saturated alkyl group Ra has eight to 24 carbon atoms, and n in Formula (I) is four to 60. The following ethers may be used in combination: a first polyoxyethylene alkyl ether which has Formula (I), which contains a saturated alkyl group Ra with eight to ten carbon atoms, and in which n in Formula (I) is four to 20 and a second polyoxyethylene alkyl ether which has Formula (I), which contains a saturated alkyl group Ra with 12 to 24 carbon atoms, and in which n in Formula (I) is ten to 60. The weight ratio of the content of the first polyoxyethylene alkyl ether to the content of the second in the ink composition is preferably 1 : 5 to 5 : 1 and more preferably 1 : 2 to 2 : 1.

The content of the polyoxyethylene alkyl ether in the ink composition may be determined such that good water solubility, stability, printing properties, color, sharpness, light resistance, and fastness can be achieved. The content of the polyoxyethylene alkyl ether therein is preferably 6% to 15% by weight when the polyoxyethylene alkyl ether has an HLB of 11.4 to 18.8, the saturated alkyl group Ra of the polyoxyethylene alkyl ether has eight to 24 carbon atoms, and n in Formula (I) is four to 100. The content of the polyoxyethylene alkyl ether therein is preferably 3% to 15% by weight when the polyoxyethylene alkyl ether has an HLB of 12.1 to 17.9, the saturated alkyl group Ra of the polyoxyethylene alkyl ether has eight to 24 carbon atoms, and n in Formula (I) is four to 100 or when the polyoxyethylene alkyl ether has

an HLB of 12.1 to 16.4, the saturated alkyl group Ra of the polyoxyethylene alkyl ether has eight to 24 carbon atoms, and n in Formula (I) is four to 60.

The sum of the weight content of the first polyoxyethylene alkyl ether and the weight content of the second polyoxyethylene alkyl ether in the ink composition is preferably 4% by weight or more.

The sum of the weight content of the first polyoxyethylene alkyl ether and the weight content of the second polyoxyethylene alkyl ether in the ink composition is preferably 2.0 times or more the weight content of the water-soluble dye in the ink composition.

The ratio of the weight content of the polyoxyethylene alkyl ether in the ink composition to the weight content of the water-soluble dye in the ink composition may be determined such that good water solubility, stability, printing properties, color, sharpness, light resistance, and fastness can be achieved. The ratio of the weight content of the polyoxyethylene alkyl ether in the ink composition to the weight content of the water-soluble dye in the ink composition is preferably 1.0 : 3.0 to 1.0 : 7.5 when the polyoxyethylene alkyl ether has an HLB of 11.4 to 18.8, Ra is a saturated alkyl group with eight to 24 carbon atoms, and n in Formula (I) is four to 100. The ratio of the weight content of the polyoxyethylene alkyl ether in the ink composition to the weight content of the water-soluble dye in the ink composition is preferably 1.0 : 1.5 to 1.0 : 7.5 when the polyoxyethylene alkyl ether has an HLB of 12.1 to 17.9, Ra is a saturated alkyl group with eight to 24 carbon atoms, and n in Formula (I) is four to 100 or when the polyoxyethylene alkyl ether has an HLB of 12.1 to 16.4, Ra is a saturated alkyl group with eight to 24 carbon atoms, and n in Formula (I) is four to 60.

In order to stably eject the ink composition from nozzles of recording heads of ink jet printers, the ink composition preferably further contains a humectant. The humectant may be any compound contained in common ink compositions for ink-jet printing which is capable of absorbing water. Examples of the humectant include polyols such as glycerin, ethylene glycol, diethylene glycol, triethylene glycol, tetraethylene glycol, polyethylene glycol, propylene glycol, dipropylene glycol, polypropylene glycol, 1,3-propanediol, 1,4-butanediol, 1,2-hexanediol, 1,5-pentanediol, 1,6-hexanediol, 1,2,6-hexanetriol, and pentaerythritol; ethers of the polyols; esters of the polyols; lactams such as 2-pyrrolidone, N-methyl-2-pyrrolidone, and ε-caprolactam; ureas such as urea, thiourea, ethylene urea, and 1,3-dimethylimidazolidinone; and sugars such as maltitol, sorbitol, gluconolactone, and maltose. These compounds may be used alone or in combination. The content of the humectant in the ink composition is preferably 4% to 40% by weight.

In order to allow the ink composition to have high wettability and permeability to fabric, the ink composition preferably further contains a water-soluble organic solvent serving as a penetrant. The water-soluble organic solvent may be any compound used in common ink compositions for inkjet printing as a penetrant. Examples of the water-soluble organic solvent include lower alcohols, e.g. $C_1$-$C_6$ alcohols such as ethanol and propanol; cellosolves such as ethylene glycol monomethyl ether and ethylene glycol monoethyl ether; carbitols such as diethylene glycol monomethyl ether and diethylene glycol monoethyl ether; and glycol ethers such as ethylene glycol mono-n-butyl ether, diethylene glycol n-butyl ether, and triethylene glycol n-butyl ether. These compounds may be used alone or in combination. The weight content of the water-soluble organic solvent in the ink composition is preferably 2% to 15% by weight.

The ink composition may further contain a surfactant serving as a humectant in addition to the polyoxyethylene alkyl ether. The surfactant may be any compound used in common ink compositions for ink-jet printing as a penetrant. Examples of the surfactant include fatty acid salts; anionic surfactants such as alkylsulfonates; nonionic surfactants such as polyoxyethylene alkylphenyl ether; acetylene glycol surfactants such as Surfynols™ 61, 82, 104, 440, 465, and 485 available from Air Products and Chemicals, Inc.; cationic surfactants; and amphoteric surfactants. These surfactants may be used alone or in combination. The content of the surfactant in the ink composition is preferably 0.2% to 2% by weight.

The ink composition may further contains water as a balance as required in addition to the water-soluble dye, the humectant, and the water-soluble organic solvent. Examples of the water contained in the ink composition include pure waters such as ion-exchanged water, ultrafiltered water, reverse osmosis-purified water, and distilled water and ultrapure waters. These waters are preferably sterilized by ultraviolet irradiation or with aqueous hydrogen peroxide because mold and bacteria can be prevented from growing in these waters over a long time.

The ink composition may further contain one or more additives, such as fungicides, preservatives, oxidation inhibitors, ultraviolet absorbers, chelating agents, oxygen absorbers, pH adjusters (for example, triethanolamine), and dissolution aids, useful in common ink compositions for inkjet printing as required.

In view of the balance between the printing quality and reliability of the ink composition, the ink composition preferably has a surface tension of 25 to 40 mN/m and more preferably 28 to 35 mN/m. Furthermore, the ink composition preferably has a viscosity of 1.5 to 10 mPa·s and more preferably 2 to 8 mPa·s at 20°C. The surface tension and viscosity of the ink composition can be adjusted within the above ranges in such a manner that the content of the water-soluble dye, the type of the humectant, and/or the content of the humectant is varied.

A printed item, such as printed fabric, having good water solubility, stability, printing properties, color, sharpness, light resistance, and fastness can be prepared by applying the ink composition to a piece of fabric, such as woven fabric, knitted fabric, or nonwoven fabric, made of synthetic polyamide fibers by ink-jet printing. The ink composition, as well as common ink compositions for ink-jet printing, is used in such a manner that the ink composition is supplied to an ink-jet printer. The ink-jet printer is not particularly limited and is preferably of a drop-on-demand type. Drop-on-demand type ink-jet printers use a piezoelectric element-recording process in which piezoelectric elements mounted in recording heads are used for recording or a thermal jet recording process in which the heat energy generated by heaters, such as heat-generating resistors, mounted in recording heads is used for recording. Any of these recording processes can be used herein.

In the case where the ink composition is applied to the fabric piece by an ink-jet printing method, the fabric piece is preferably pretreated with a pretreatment agent. The pretreatment of the fabric piece is as follows: the fabric piece is immersed in the pretreatment agent or after the pretreatment agent is applied to the fabric piece by coating, spraying, or the like, the fabric piece is dried.

The pretreatment agent may be an aqueous solution containing 0.01% to 20% by weight of a sizing agent such as a water-soluble polymer. Examples of the sizing agent include starches such as corn starch and wheat starch; celluloses such as carboxymethylcellulose and hydroxymethylcellulose; polysaccharides such as sodium alginate, gum arabic, locust bean gum, trant gum, guar gum, and tamarind gum; proteins such as gelatin and casein; tannin; natural water-soluble polymers such as lignin; and synthetic water-soluble polymers such as polyvinyl alcohols, polyethylene oxides, acrylic polymers, and maleic anhydride polymers. The pretreatment agent may contain a humectant such as urea or thiourea, a pH adjuster, a reduction inhibitor, a penetrant, a sequestering agent, an antifoaming agent, and/or an additive as required.

In the case where the ink composition is applied to the fabric piece by the ink-jet printing method, after a character and/or an image is printed on the fabric piece by applying the ink composition to the fabric piece, the water-soluble dye is fixed. Examples of a process for fixing the water-soluble dye include an atmospheric-pressure steaming process, high-pressure steaming process, and thermo-fixing process similar to a dye-fixing process used in a conventional printing method. After the water-soluble dye is fixed, the fabric piece is water-washed and then dried in accordance with common practice. The fabric piece may be subjected to soaping as required such that the unfixed water-soluble dye is washed off with a hot soap solution.

## Examples

The present invention will be further described in detail with reference to examples. The present invention is not limited to the examples.

### Preparation of ink compositions

Each ink composition was prepared so as to have the composition below in such a manner that components were mixed together and the mixture was filtered through a 10-μm membrane filter. Surfactants used to prepare the ink compositions contained polyoxyethylene alkyl ethers which had Formula (I) and which contained saturated alkyl groups represented by Ra in Formula (I). The number of carbon atoms in the saturated alkyl groups, n in Formula (I), and the HLBs of the saturated alkyl groups were as shown in Table 1.

Table 1

| Surfactant | Number of carbon atoms in saturated alkyl groups represented by Ra | n | HLB |
|---|---|---|---|
| Surfactant 1 | 8 | 2 | 10.0 |
| Surfactant 2 | 8 | 3 | 11.2 |
| Surfactant 3 | 8 | 4 | 12.1 |
| Surfactant 4 | 8 | 6 | 13.5 |
| Surfactant 5 | 8 | 8 | 14.5 |
| Surfactant 6 | 8 | 10 | 15.2 |
| Surfactant 7 | 8 | 20 | 17.1 |
| Surfactant 8 | 10 | 5 | 11.4 |
| Surfactant 9 | 10 | 10 | 14.0 |
| Surfactant 10 | 10 | 20 | 16.3 |
| Surfactant 11 | 10 | 40 | 17.9 |

(continued)

| Table 1 | | | |
|---|---|---|---|
| Surfactant | Number of carbon atoms in saturated alkyl groups represented by Ra | n | HLB |
| Surfactant 12 | 10 | 100 | 19.1 |
| Surfactant 13 | 12 | 5 | 10.3 |
| Surfactant 14 | 12 | 10 | 13.0 |
| Surfactant 15 | 12 | 20 | 15.5 |
| Surfactant 16 | 12 | 40 | 17.4 |
| Surfactant 17 | 12 | 100 | 18.8 |
| Surfactant 18 | 13 | 5 | 9.8 |
| Surfactant 19 | 13 | 10 | 12.5 |
| Surfactant 20 | 13 | 20 | 15.1 |
| Surfactant 21 | 13 | 40 | 17.1 |
| Surfactant 22 | 13 | 100 | 18.7 |
| Surfactant 23 | 16 | 10 | 11.3 |
| Surfactant 24 | 16 | 20 | 14.1 |
| Surfactant 25 | 16 | 40 | 16.4 |
| Surfactant 26 | 16 | 100 | 18.4 |
| Surfactant 27 | 18 | 10 | 10.6 |
| Surfactant 28 | 18 | 20 | 13.5 |
| Surfactant 29 | 18 | 40 | 16.0 |
| Surfactant 30 | 18 | 100 | 18.2 |
| Surfactant 31 | 24 | 60 | 16.2 |

Example 1

An ink composition containing the following components was prepared: 2.0% by weight of C. I. Acid Blue 290, 10.0% by weight of butyl triglycol, 10.0% by weight of glycerin, and 1.0% by weight of Olfine E1010, the remainder being ultrapure water.

Example 2

An ink composition containing the following components was prepared: 2.0% by weight of C. I. Acid Blue 290, 10.0% by weight of butyl triglycol, 10.0% by weight of glycerin, 1.0% by weight of Olfine E1010, and 3.0% by weight of Surfactant 1, the remainder being ultrapure water.

Examples 3 to 32

Ink compositions were prepared in Examples 3 to 32 using substantially the same components as those used in Example 2 except that Surfactants 2 to 31 shown in Table 1 were used instead of Surfactant 1.

Examples 33 to 63

Ink compositions were prepared in Examples 33 to 63 using substantially the same components as those used in Examples 2 to 32 except that the content of each of the surfactants in the ink compositions was increased to 15% by weight.

Examples 64 to 124

Each ink composition was prepared so as to have the composition below in such a manner that components shown in Tables 2 to 9 were mixed together and the mixture was filtered through a 10-μm membrane filter. Values in Tables 2 to 9 represent the contents of the components on a weight percent basis. Surfactants used to prepare the ink compositions contained polyoxyethylene alkyl ethers which had Formula (I) and which contained saturated alkyl groups represented by Ra in Formula (I). The number of carbon atoms in the saturated alkyl groups, n in Formula (I), and the HLBs of the saturated alkyl groups were as shown in Table 1.

Table 2

| Examples | 64 | 65 | 66 | 67 | 68 | 69 | 70 | 71 |
|---|---|---|---|---|---|---|---|---|
| C.I. Acid Blue 290 | 2 | 2 | 2 | 2 | 2 | 2 | 2 | 2 |
| Butyl triglycol | 10 | 10 | 10 | 10 | 10 | 10 | 10 | 10 |
| Glycerin | 10 | 10 | 10 | 10 | 10 | 10 | 10 | 10 |
| Olfine E1010 | 1 | 1 | 1 | 1 | 1 | 1 | 1 | 1 |
| Ultrapure water | 72 | 72 | 72 | 72 | 71 | 71 | 71 | 71 |
| Surfactants 8 | 5 | | | | 6 | | | |
| Surfactant 17 | | 5 | | | | 6 | | |
| Surfactant 22 | | | 5 | | | | 6 | |
| Surfactant 26 | | | | | | | | |
| Surfactant 30 | | | | 5 | | | | 6 |
| Total | 100 | 100 | 100 | 100 | 100 | 100 | 100 | 100 |

Table 3

| Examples | 72 | 73 | 74 | 75 |
|---|---|---|---|---|
| C.I. Acid Blue 290 | 2 | 2 | 2 | 2 |
| Butyl triglycol | 10 | 10 | 10 | 10 |
| Glycerin | 10 | 10 | 10 | 10 |
| Olfine E1010 | 1 | 1 | 1 | 1 |
| Ultrapure water | 75 | 75 | 75 | 75 |
| Surfactant 7 | 2 | | | |
| Surfactant 11 | | 2 | | |
| Surfactant 16 | | | 2 | |
| Surfactant 21 | | | | 2 |
| Total | 100 | 100 | 100 | 100 |

Table 4

| Examples | 76 | 77 | 78 | 79 | 80 | 81 | 82 | 83 | 84 | 85 | 86 | 87 | 88 | 89 | 90 | 91 | 92 | 93 | 94 | 95 |
|---|---|---|---|---|---|---|---|---|---|---|---|---|---|---|---|---|---|---|---|---|
| C.I. Acid Blue 290 | 2 | 2 | 2 | 2 | 2 | 2 | 2 | 2 | 2 | 2 | 2 | 2 | 2 | 2 | 2 | 2 | 2 | 2 | 2 | 2 |
| Butyl triglycol | 10 | 10 | 10 | 10 | 10 | 10 | 10 | 10 | 10 | 10 | 10 | 10 | 10 | 10 | 10 | 10 | 10 | 10 | 10 | 10 |
| Glycerin | 10 | 10 | 10 | 10 | 10 | 10 | 10 | 10 | 10 | 10 | 10 | 10 | 10 | 10 | 10 | 10 | 10 | 10 | 10 | 10 |
| Olfine E1010 | 1 | 1 | 1 | 1 | 1 | 1 | 1 | 1 | 1 | 1 | 1 | 1 | 1 | 1 | 1 | 1 | 1 | 1 | 1 | 1 |
| Ultrapure water | 71 | 71 | 71 | 71 | 71 | 71 | 71 | 71 | 71 | 71 | 71 | 71 | 71 | 71 | 71 | 71 | 71 | 71 | 71 | 71 |
| Surfactant 3 | 3 | | | | | | 3 | 3 | 3 | 3 | | | | | 3 | | | | | |
| Surfactant 10 | | 3 | | | | | | | | | 3 | 3 | 3 | 3 | 3 | | | | | |
| Surfactant 14 | | | 3 | | | | 3 | | | | 3 | | | | | 3 | | 3 | 3 | |
| Surfactant 19 | | | | 3 | | | | 3 | | | | 3 | | | | 3 | 3 | | | |
| Surfactant 24 | | | | | 3 | | | | 3 | | | | 3 | | | | 3 | 3 | | 3 |
| Surfactant 28 | | | | | | 3 | | | | 3 | | | | 3 | | | | | 3 | 3 |
| Surfactant 31 | 3 | 3 | 3 | 3 | 3 | 3 | | | | | | | | | | | | | | |
| Total | 100 | 100 | 100 | 100 | 100 | 100 | 100 | 100 | 100 | 100 | 100 | 100 | 100 | 100 | 100 | 100 | 100 | 100 | 100 | 100 |

Table 5

| Examples | 96 | 97 | 98 | 99 | 100 | 101 | 102 |
|---|---|---|---|---|---|---|---|
| C.I. Acid Blue 290 | 2 | 2 | 2 | 2 | 2 | 2 | 2 |
| Butyl triglycol | 10 | 10 | 10 | 10 | 10 | 10 | 10 |
| Glycerin | 10 | 10 | 10 | 10 | 10 | 10 | 10 |
| Olfine E1010 | 1 | 1 | 1 | 1 | 1 | 1 | 1 |
| Ultrapure water | 71 | 71 | 71 | 71 | 71 | 73 | 75 |
| Surfactant 3 | 5 | 4 | 3 | 2 | 1 | 2 | 1 |
| Surfactant 31 | 1 | 2 | 3 | 4 | 5 | 2 | 1 |
| Total | 100 | 100 | 100 | 100 | 100 | 100 | 100 |

Table 6

| Examples | 103* | 104* | 105* | 106* | 107* | 108* |
|---|---|---|---|---|---|---|
| C.I. Acid Blue 239 | 2 | 2 | 2 | 2 | 2 | 2 |
| Butyl triglycol | 10 | 10 | 10 | 10 | 10 | 10 |
| Glycerin | 10 | 10 | 10 | 10 | 10 | 10 |
| Olfine E1010 | 1 | 1 | 1 | 1 | 1 | 1 |
| Ultrapure water | 77 | 71 | 71 | 71 | 71 | 71 |
| Surfactant 3 | | 3 | | | | |
| Surfactant 10 | | | 3 | | | |
| Surfactant 14 | | | | 3 | | |
| Surfactant 19 | | | | | 3 | |
| Surfactant 24 | | | | | | 3 |
| Surfactant 31 | | 3 | 3 | 3 | 3 | 3 |
| Total | 100 | 100 | 100 | 100 | 100 | 100 |
| * Comparitive | | | | | | |

Table 7

| Examples | 109* | 110 | 111 | 112 | 113 | 114 |
|---|---|---|---|---|---|---|
| C.I. Acid Blue 258 | 2 | 2 | 2 | 2 | 2 | 2 |
| Butyl triglycol | 10 | 10 | 10 | 10 | 10 | 10 |
| Glycerin | 10 | 10 | 10 | 10 | 10 | 10 |
| Olfine E1010 | 1 | 1 | 1 | 1 | 1 | 1 |
| Ultrapure water | 77 | 71 | 71 | 71 | 71 | 71 |
| Surfactant 3 | | 3 | | | | |
| Surfactant 10 | | | 3 | | | |
| Surfactant 14 | | | | 3 | | |
| Surfactant 19 | | | | | 3 | |

(continued)

| Examples | 109* | 110 | 111 | 112 | 113 | 114 |
|---|---|---|---|---|---|---|
| Surfactant 24 | | | | | | 3 |
| Surfactant 31 | | 3 | 3 | 3 | 3 | 3 |
| Total | 100 | 100 | 100 | 100 | 100 | 100 |
| * Comparative | | | | | | |

Table 8

| Examples | 115* | 116 | 117 | 118 | 119 | 120 |
|---|---|---|---|---|---|---|
| C.I. Acid Blue 280 | 2 | 2 | 2 | 2 | 2 | 2 |
| Butyl triglycol | 10 | 10 | 10 | 10 | 10 | 10 |
| Glycerin | 10 | 10 | 10 | 10 | 10 | 10 |
| Olfine E1010 | 1 | 1 | 1 | 1 | 1 | 1 |
| Ultrapure water | 77 | 71 | 71 | 71 | 71 | 71 |
| Surfactant3 | | 3 | | | | |
| Surfactant 10 | | | 3 | | | |
| Surfactant 14 | | | | 3 | | |
| Surfactant 19 | | | | | 3 | |
| Surfactant 24 | | | | | | 3 |
| Surfactant 31 | | 3 | 3 | 3 | 3 | 3 |
| Total | 100 | 100 | 100 | 100 | 100 | 100 |
| * Comparitive | | | | | | |

Table 9

| Examples | 121* | 122 | 123 | 124 |
|---|---|---|---|---|
| C.I. Acid Blue 239 | 2 | | | |
| C.I. Acid Blue 258 | | 2 | | |
| C.I. Acid Blue 280 | | | 2 | |
| C.I. Acid Blue 290 | | | | 2 |
| Butyl triglycol | 10 | 10 | 10 | 10 |
| Glycerin | 10 | 10 | 10 | 10 |
| Olfine E1010 | 1 | 1 | 1 | 1 |
| Ultrapure water | 71 | 71 | 71 | 71 |
| Surfactant 14 | 3 | 3 | 3 | 3 |
| Surfactant 31 | 3 | 3 | 3 | 3 |
| Total | 100 | 100 | 100 | 100 |
| * Comparative | | | | |

Evaluation of ink compositions

Each ink compositions was filtered through a membrane filter, Omnipore™, having a pore size of 1 μm, available from Millipore Corporation. For each ink composition, the filtrate was divided up into ten portions of 100 ml, each portion being stored in a hermetically sealed container such that the ink composition was prevented from being dried. Two portions of each ink composition type were left at 70°C for one week, two were left at 60°C for one week, two were left at 50°C for one week, two were left at 40°C for one week and two were left at 25°C for one week. One portion of each ink composition from each temperature group was filtered through a membrane filter having a pore size of 1 μm. Deposits (hereinafter referred to as the first deposits) remaining on the membrane filter, through which the ink composition was filtered, were collected and then weighed. The remaining portions were likewise filtered through a membrane filter having a pore size of 1 μm and deposits (hereinafter referred to as the second deposits) obtained therefrom were collected and then weighed. The ink compositions were evaluated as follows: a rating of 7 was given to an ink composition in which the sum of the weight of the first deposit and the weight of the second deposit was 1.4 g or more, a rating of 6 was given to an ink composition in which the sum thereof was 1.2 to less than 1.4 g, a rating of 5 was given to an ink composition in which the sum thereof was 1.0 to less than 1.2 g, a rating of 4 was given to an ink composition in which the sum thereof was 0.8 to less than 1.0 g, a rating of 3 was given to an ink composition in which the sum thereof was 0.6 to less than 0.8 g, a rating of 2 was given to an ink composition in which the sum thereof was 0.4 to less than 0.6 g, a rating of 1 was given to an ink composition in which the sum thereof was 0.2 to less than 0.4 g, and a rating of 0 was given to an ink composition in which the sum thereof was less than 0.2 g. The evaluation results are summarized in Table 10 below.

Table 10

| Examples | 1* | 2* | 3* | 4 | 5 | 6 | 7 | 8 | 9 | 10 | 11 | 12 | 13* | 14 | 15 | 16 |
|---|---|---|---|---|---|---|---|---|---|---|---|---|---|---|---|---|
| Rating | 7 | 6 | 6 | 2 | 2 | 3 | 3 | 4 | 5 | 3 | 3 | 4 | 6 | 6 | 2 | 3 |

| Examples | 17 | 18 | 19* | 20 | 21 | 22 | 23 | 24* | 25 | 26 | 27 | 28* | 29 | 30 | 31 | 32 |
|---|---|---|---|---|---|---|---|---|---|---|---|---|---|---|---|---|
| Rating | 4 | 5 | 6 | 2 | 3 | 4 | 5 | 6 | 3 | 3 | 5 | 6 | 2 | 3 | 5 | 3 |

| Examples | 33* | 34* | 35 | 36 | 37 | 38 | 39 | 40 | 41 | 42 | 43 | 44* | 45 | 46 | 47 | 48 |
|---|---|---|---|---|---|---|---|---|---|---|---|---|---|---|---|---|
| Rating | 5 | 5 | 2 | 2 | 2 | 2 | 3 | 4 | 2 | 2 | 3 | 5 | 5 | 2 | 2 | 3 |

| Examples | 49 | 50* | 51 | 52 | 53 | 54 | 55* | 56 | 57 | 58 | 59 | 60 | 61 | 62 | 63 |
|---|---|---|---|---|---|---|---|---|---|---|---|---|---|---|---|
| Rating | 4 | 5 | 2 | 2 | 3 | 4 | 5 | 2 | 2 | 4 | 5 | 2 | 2 | 4 | 2 |

| Examples | 64 | 65 | 66 | 67 | 68 | 69 | 70 | 71 | 72 | 73 | 74 | 75 | 76 | 77 | 78 | 79 |
|---|---|---|---|---|---|---|---|---|---|---|---|---|---|---|---|---|
| Rating | 5 | 5 | 5 | 5 | 4 | 4 | 4 | 4 | 5 | 5 | 5 | 5 | 0 | 0 | 2 | 2 |

| Examples | 80 | 81 | 82 | 83 | 84 | 85 | 86 | 87 | 88 | 89 | 90 | 91 | 92 | 93 | 94 | 95 |
|---|---|---|---|---|---|---|---|---|---|---|---|---|---|---|---|---|
| Rating | 2 | 2 | 0 | 0 | 0 | 0 | 0 | 0 | 0 | 0 | 2 | 2 | 2 | 2 | 2 | 2 |

| Examples | 96 | 97 | 98 | 99 | 100 | 101 | 102 | 103* | 104* | 105* | 106* | 107* | 108* | 109* | 110 | 111 |
|---|---|---|---|---|---|---|---|---|---|---|---|---|---|---|---|---|
| Rating | 2 | 0 | 0 | 0 | 2 | 0 | 2 | 7 | 0 | 0 | 2 | 2 | 2 | 7 | 0 | 0 |

| Examples | 112 | 113 | 114 | 115* | 116 | 117 | 118 | 119 | 120 |
|---|---|---|---|---|---|---|---|---|---|
| Rating | 2 | 2 | 2 | 7 | 0 | 0 | 2 | 2 | 2 |

* Comparative

The following agent was applied to sheets of nylon taffeta: a pretreatment agent containing 1.0% by weight of sodium alginate, 1.0% by weight of guar gum, 4.0% by weight of ammonium sulfate, and 10.0% by weight of urea, the remainder being ultrapure water. The nylon taffeta sheets were mangled at a pickup of 30% and then dried. The resulting nylon taffeta sheets were printed with the ink compositions prepared in Examples 121 to 124 using a printer, PM-A750, available from Seiko Epson Corporation and then subjected to fixing at 110°C for 30 minutes by steaming.

The resulting nylon taffeta sheets were washed with Olfine E1010 available from Nissin Chemical Industry Co., Ltd. and a 0.2% aqueous solution of Laccorl STA available from Meisei Chemical Works, Ltd. at 55°C for ten minutes and then dried, whereby specimens were prepared. The specimens were evaluated for light resistance by a test method for colour fastness to xenon arc lamp light according to JIS L 0843 A, whereby the specimens were graded. The evaluation results are summarized in Table 11 below.

Table 11

| Examples | 121* | 122 | 123 | 124 |
|---|---|---|---|---|
| Light resistance (grade) | 4 | 6-5 | 6-5 | 6 |
| * Comparative | | | | |

**Claims**

**1.** An ink composition for ink-jet printing comprising:

a water-soluble dye having an anthraquinone skeleton whose water solubility is 50 g/L or less at 30°Cand which is selected from C.I. Acid Blue 258, 280 and 290; and
at least one polyoxyethylene alkyl ether having an HLB of 11.4 to 18.8 and which has the following formula:

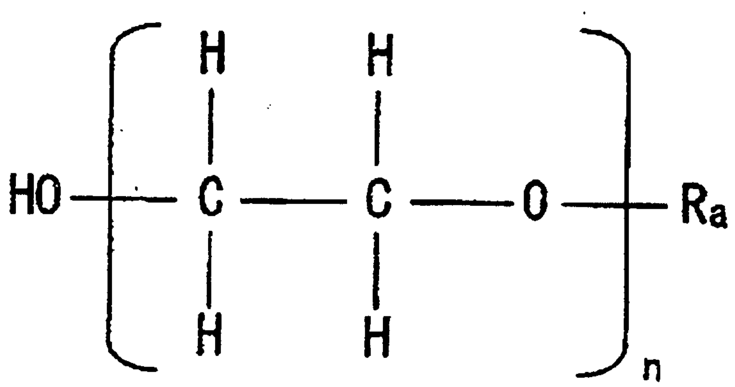
(I)

wherein n is four to 100 and Ra is a saturated alkyl group with eight to 24 carbon atoms.

**2.** An ink composition according to Claim 1, wherein the polyoxyethylene alkyl ether has an HLB of 12.1 to 17.9.

**3.** The ink composition according to Claim 1, wherein the polyoxyethylene alkyl ether has an HLB of 12.1 to 16.4 and n in Formula (I) is four to 60.

**4.** The ink composition according to Claim 1, wherein the content of the polyoxyethylene alkyl ether in the ink composition is 6% to 15% by weight.

**5.** The ink composition according to Claim 2 or 3, wherein the content of the polyoxyethylene alkyl ether in the ink composition is 3% to 15% by weight

**6.** The ink composition according to Claim 1, wherein the ratio of the weight content of the water-soluble dye to the weight content of the polyoxyethylene alkyl ether in the ink composition is 1.0 : 3.0 to 1.0 : 7.5.

**7.** The ink composition according to Claim 2 or 3, wherein the ratio of the weight content of the water-soluble dye to the weight content of the polyoxyethylene alkyl ether in the ink composition is 1.0 : 1.5 to 1.0 : 7.5.

**8.** The ink composition according to any one of Claims 3 1 to 4, wherein the polyoxyethylene alkyl ether includes a first polyoxyethylene alkyl ether of Formula (I), wherein Ra is a saturated alkyl group having eight to ten carbon

atoms, and in which n in Formula (I) is four to 20 and a second polyoxyethylene alkyl ether of Formula (I), wherein Ra is a saturated alkyl group having 12 to 24 carbon atoms, and in which n in Formula (I) is 10 to 60.

**9.** The ink composition according to Claim 8, wherein the sum of the weight content of the first polyoxyethylene alkyl ether and the weight content of the second polyoxyethylene alkyl ether in the ink composition is 4% by weight or more.

**10.** The ink composition according to Claim 8 or 9, wherein the ratio of the weight content of the first polyoxyethylene alkyl ether to the weight content of the second polyoxyethylene alkyl ether in the ink composition is 1 : 5 to 5 : 1.

**11.** The ink composition according to any one of Claims 8 to 10, wherein the sum of the weight content of the first polyoxyethylene alkyl ether and the weight content of the second polyoxyethylene alkyl ether in the ink composition is 2.0 times or more the weight content of the water-soluble dye in the ink composition.

**12.** An ink-jet printing method comprising using the ink composition according to any one of Claims 1 to 11.

**Patentansprüche**

**1.** Tintenzusammensetzung für den Tintenstrahldruck umfassend:

einen wasserlöslichen Farbstoff mit einem Anthrachinongerüst, dessen Wasserlöslichkeit 50 g/l oder weniger bei 30°C ist und der ausgewählt ist aus C.I. Acid Blue 258, 280 und 290; und
zumindest einen Polyoxyethylenalkylether mit einem HLB von 11,4 bis 18,8 und mit der folgenden Formel:

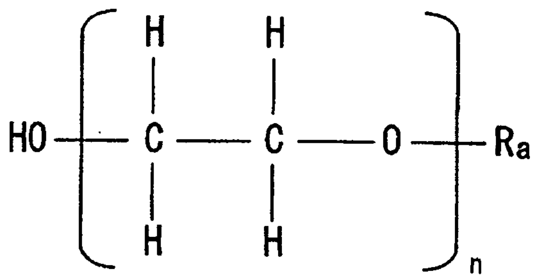

(I)

worin n 4 bis 100 ist und Ra eine gesättigte Alkylgruppe mit 8 bis 24 Kohlenstoffatomen ist.

**2.** Tintenzusammensetzung nach Anspruch 1, worin der Polyoxyethylenalkylether einen HLB von 12,1 bis 17,9 hat.

**3.** Tintenzusammensetzung nach Anspruch 1, worin der Polyoxyethylenalkylether einen HLB von 12,1 bis 16,4 hat und n in der Formel (I) 4 bis 60 ist.

**4.** Tintenzusammensetzung nach Anspruch 1, worin der Gehalt des Polyoxyethylenalkylethers in der Tintenzusammensetzung 6 bis 15 Gew.-% ist.

**5.** Tintenzusammensetzung nach Anspruch 2 oder 3, worin der Gehalt des Polyoxyethylenalkylethers in der Tintenzusammensetzung 3 bis 15 Gew.-% ist.

**6.** Tintenzusammensetzung nach Anspruch 1, worin das Verhältnis des Gewichtsgehaltes des wasserlöslichen Farbstoffes zum Gewichtsgehalt des Polyoxyethylenalkylethers in der Tintenzusammensetzung 1,0:3,0 bis 1,0:7,5 ist.

**7.** Tintenzusammensetzung nach Anspruch 2 oder 3, worin das Verhältnis des Gewichtsgehaltes des wasserlöslichen Farbstoffes zum Gewichtsgehalt des Polyoxyethylenalkylethers in der Tintenzusammensetzung 1,0:1,5 bis 1,0:7,5 ist.

**8.** Tintenzusammensetzung nach einem der Ansprüche 1 bis 3, worin der Polyoxyethylenalkylether einen ersten Polyoxyethylenalkylether der Formel (I), worin Ra eine gesättigte Alkylgruppe mit 8 bis 10 Kohlenstoffatomen und n in der Formel (I) 4 bis 20 ist, und einen zweiten Polyoxyethylenalkylether der Formel (I) umfasst, worin Ra eine

gesättigte Alkylgruppe mit 12 bis 24 Kohlenstoffatomen und n in der Formel (I) 10 bis 60 ist.

**9.** Tintenzusammensetzung nach Anspruch 8, worin die Summe des Gewichtsgehaltes des ersten Polyoxyethylenalkylethers und des Gewichtsgehaltes des zweiten Polyoxyethylenalkylethers in der Tintenzusammensetzung 4 Gew.-% oder mehr ist.

**10.** Tintenzusammensetzung nach Anspruch 8 oder 9, worin das Verhältnis des Gewichtsgehaltes des ersten Polyoxyethylenalkylethers zum Gewichtsgehalt des zweiten Polyoxyethylenalkylethers in der Tintenzusammensetzung 1:5 bis 5:1 ist.

**11.** Tintenzusammensetzung nach einem der Ansprüche 8 bis 10, worin die Summe des Gewichtsgehaltes des ersten Polyoxyethylenalkylethers und des Gewichtsgehaltes des zweiten Polyoxyethylenalkylethers in der Tintenzusammensetzung das 2,0-fache oder mehr des Gewichtsgehaltes des wasserlöslichen Farbstoffes in der Tintenzusammensetzung ist.

**12.** Tintenstrahl-Druckverfahren, umfassend die Verwendung der Tintenzusammensetzung nach einem der Ansprüche 1 bis 11.

## Revendications

**1.** Composition d'encre pour impression à jet d'encre comprenant :

une teinture soluble dans de l'eau ayant un squelette d'anthraquinone dont la solubilité dans l'eau est de 50 g/l ou moins à 30 °C et qui est sélectionnée à partir d'un C.I. Bleu Acide 258, 280 et 290 ; et
au moins un éther de polyoxyéthylène alkyle ayant un HLB de 11,4 à 18,8 et qui a la formule suivants :

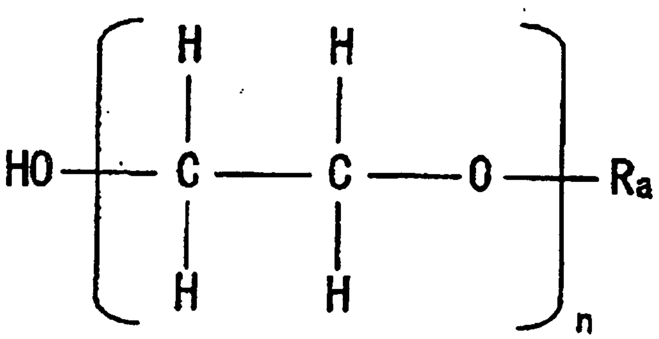

(I)

dans laquelle n vaut quatre à 100 et Ra est un groupe alkyle saturé avec huit à 24 atomes de carbone.

**2.** Composition d'encre selon la revendication 1, dans laquelle l'éther de polyoxyéthylène alkyle a un HLB de 12,1 à 17,9.

**3.** Composition d'encre selon la revendication 1, dans laquelle l'éther de polyoxyéthylène alkyle a un HLB de 12,1 à 16,4 et n dans la Formule (I) vaut quatre à 60.

**4.** Composition d'encre selon la revendication 1, dans laquelle la teneur de l'éther de polyoxyéthylène alkyle dans la composition d'encre est de 6 % à 15 % en poids.

**5.** Composition d'encre selon la revendication 2 ou 3, dans laquelle la teneur de l'éther de polyoxyéthylène alkyle dans la composition d'encre est de 3 % à 15 % en poids.

**6.** Composition d'encre selon la revendication 1, dans laquelle le rapport de la teneur en poids de la teinture soluble dans de l'eau sur la teneur en poids de l'éther de polyoxyéthylène alkyle dans la composition d'encre est de 1,0 : 3,0 à 1,0 : 7,5.

**7.** Composition d'encre selon la revendication 2 ou 3, dans laquelle le rapport de la teneur en poids de la teinture

soluble dans de l’eau sur la teneur en poids de l’éther de polyoxyéthylène alkyle dans la composition d’encre est de 1,0 : 1,5 à 1,0 : 7,5.

**8.** Composition d’encre selon l’une quelconque des revendications 1 à 3, dans laquelle l’éther de polyoxyéthylène alkyle inclut un premier éther de polyoxyéthylène alkyle de Formule (I), dans lequel Ra est un groupe alkyle saturé ayant huit à dix atomes de carbone, et dans lequel n dans la Formule (I) vaut quatre à 20 et un second éther de polyoxyéthylène alkyle de Formule (I), dans lequel Ra est un groupe alkyle saturé ayant 12 à 24 atomes de carbone, et dans lequel n dans la Formule (I) vaut 10 à 60.

**9.** Composition d’encre selon la revendication 8, dans laquelle la somme de la teneur en poids du premier éther de polyoxyéthylène alkyle et de la teneur en poids du second éther de polyoxyéthylène alkyle dans la composition d’encre est de 4 % en poids ou plus.

**10.** Composition d’encre selon la revendication 8 ou 9, dans laquelle le rapport de la teneur en poids du premier éther de polyoxyéthylène alkyle sur la teneur en poids du second éther de polyoxyéthylène alkyle dans la composition d’encre est de 1 : 5 à 5 : 1.

**11.** Composition d’encre selon l’une quelconque des revendications 8 à 10, dans laquelle la somme de la teneur en poids du premier éther de polyoxyéthylène alkyle et de la teneur en poids du second éther de polyoxyéthylène alkyle dans la composition d’encre est 2,0 fois ou plus la teneur en poids de la teinture soluble dans de l’eau dans la composition d’encre.

**12.** Procédé d’impression à jet d’encre comprenant une utilisation de la composition d’encre selon l’une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7003666 A
- JP 8302266 A
- JP 8209048 A
- WO 2008019075 A

### Non-patent literature cited in the description

- **Koda, Y ; Yuki Gainenzu - Kiso to Oyo ; Fujita, A et al.** *Keitoteki Yuki Teisei Bunseki*